# EUROPÄISCHE PATENTANMELDUNG

(11) **EP 4 721 998 A1**
(43) Veröffentlichungstag der Anmeldung: **08.04.2026**
(21) Anmeldenummer: 25202211.6
(22) Anmeldetag: 15.09.2025
(51) Int. Cl.: B60C 9/06, B60C 9/11, B60C 9/18, B60C 19/12, B60C 9/10, B60C 9/02, B29D 30/38

(54) **REIFEN FÜR EINSPURIGE FAHRZEUGE**

(30) Priorität: 01.10.2024 DE 102024209600
(71) Anmelder: Continental Reifen Deutschland GmbH, 30175 Hannover (DE)
(72) Erfinder: Sudikatis, Florian, 30175 Hannover (DE)
(74) Vertreter: Continental Corporation

(57) **Zusammenfassung**

Reifen (1) für einspurige Fahrzeuge, umfassend eine Karkasse (10) aus einem in Gummimasse eingebetteten Flächengebilde auf Basis von Fäden (100), wobei die Karkasse (10) im Querschnitt betrachtet im Wesentlichen kreisbogenförmig ausgebildet ist und ausgehend von einem Zenit (105) beidseits über Seitenwände (14) verläuft, und einem umfänglich auf die Karkasse (10) in einer Umfangsrichtung (U) durchgängig aufgebrachten Laufstreifen (12), wobei das Flächengebilde der Karkasse (10) aus einem nicht gespleißten mindestens einlagigen Fadengelege aus parallel zueinander verlaufenden Fäden (100) gebildet ist, wobei die Fäden (100) mindestens einer Lage des Fadengeleges im Zenit (105) der Karkasse (10) gegenüber der Umfangsrichtung (U) einen Winkel (α) von 40° bis 50° einschließen.

## Beschreibung

Die Erfindung betrifft einen Reifen für einspurige Fahrzeuge, insbesondere Fahrräder und weiter bevorzugt Rennräder, umfassend eine Karkasse aus einem in Gummimasse eingebetteten Flächengebilde auf Basis von Fäden, wobei die Karkasse im Querschnitt betrachtet im Wesentlichen kreisbogenförmig ausgebildet ist und ausgehend von einem Zenit beidseits über Seitenwände verläuft, und einem umfänglich auf die Karkasse in einer Umfangsrichtung durchgängig aufgebrachten Laufstreifen.

Reifen der eingangsgenannten Art sind bekannt und werden beispielsweise als Fahrrad-, EPAC (Electric Pedal Assist Cycle)- oder Leichtkraftfahrzeug-Reifen mit einem besonderen Augenmerk auf niedriges Gewicht, geringen Rollwiderstand und hinreichenden Pannenschutz gestaltet. Sie können als sogenannte Clincher-Reifen mit einer im Querschnitt offenen und in Wulsten mit eingebetteten Wulstkernen Karkasse oder auch als geschlossene Tubular-Reifen mit einer im Querschnitt geschlossenen Karkasse ohne Wulste und Wulstkerne ausgebildet sein. Übliche Ausführungsformen solcher Reifen umfassen als Karkassmaterial zur Ausbildung der Karkasse ein Gewebe aus miteinander verwobenen Kett- und Schussfäden, die in eine Gummimasse eingebettet werden. Als Festigkeitsträger einer solchen Karkasse spielen überwiegend die Kettfäden eine Rolle, währen die orthogonal zu diesen verlaufenden Schussfäden eher eine Rolle in Bezug auf die Verarbeitung und die Maschinengängigkeit im Reifenbau spielen, zum Beispiel als Stabilisierung im Kalandrier-Prozess zur Aufbringung der Gummimasse. Für die Anwendung als Karkassmaterial werden diese Gewebe in einem gewünschten Winkel, meist zwischen 40° und 58° geschnitten und dann zum Karkassmaterial gespleißt, d. h. die einzelnen geschnittenen Abschnitte werden rechtwinklig zur Zuführeinrichtung aneinandergefügt, wie es beispielhaft aus der US 2 968 331 A bekannt ist. Das Spleißen stellt einen zusätzlichen Prozessschritt dar, um einen Winkel der Kettfäden vorzusehen, den eine solches Gewebe aufgrund seiner Charakteristik von sich orthogonal kreuzenden Fadensystemen nicht von sich aus mit sich bringt. Außerdem lassen sich mit derartigen Geweben, mit Ausnahme spezieller 3-D-Gewebe, die für den Reifenbauteile diverse andere Nachteile haben, keine mehrlagigen Flächengebilde erzeugen, die beispielsweise für einen ausreichenden Pannenschutz wünschenswert sind.

Aus der US 2020/0247185 A1 und der EP 2 953 800 A1 ist ein Reifen mit einer Karkasslage aus einem Gewebe bekannt, wobei außenseitig auf die Karkasse unterhalb des Laufstreifens Verstärkungslagen aus unterschiedlich orientierten Fadengelegen aufgebracht werden.

Aufgabe der Erfindung ist es, einen Reifen der eingangs genannten Art vorzuschlagen, der mit geringerem Aufwand herstellbar ist und sich durch einen optimierten Rollwiderstand bei gleichzeitig gutem Pannenschutzschutz auszeichnet.

Zur Lösung der gestellten Aufgabe wird erfindungsgemäß die Ausgestaltung eines Reifens gemäß den Merkmalen des Patentanspruchs 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass das Flächengebilde der Karkasse aus einem nicht gespleißten mindestens einlagigen Fadengelege aus parallel zueinander verlaufenden Fäden gebildet ist, wobei die Fäden mindestens einer Lage des Fadengeleges im Zenit der Karkasse gegenüber der Umfangsrichtung einen Winkel von 40° bis 50° einschließen.

Durch die erfindungsgemäße Ausbildung des Flächengebildes der Karkasse aus einem Fadengelege aus parallel zueinander verlaufenden Fäden lassen sich die gewünschten Fadenwinkel in Bezug auf die Umfangsrichtung bereits bei der Herstellung des Flächengebildes zwischen 0° und 90° frei definieren, sodass das Flächengebilde direkt in dem für den Reifenbau gewünschten Winkel produziert werden kann und auf den Spleißvorgang verzichtet werden kann, d. h. das Flächengebilde braucht nicht mehr gespleißt zu werden, der entsprechende Spleißprozess kann erfindungsgemäß entfallen. Es ist somit möglich, mindestens eine Lage des Fadengeleges im Zenit der Karkasse gegenüber der Umfangsrichtung in einem Winkel von 40° bis 50° anzuordnen.

Durch Ausbildung des Flächengebildes als lediglich eine Fadenlage umfassendes mono-axiales Gelege können die Eigenschaften eines Gewebes mit geringer Schussfadendichte nachgebildet werden.

Für Anwendungen, bei denen höhere Festlichkeiten gewünscht sind oder zum Beispiel zum Erzeugen von ähnlichen Eigenschaften wie bei Doppelkarkassen können alternativ auch bi- und multi-axiale Gelege verwendet werden.

Nach einem anderen Vorschlag der Erfindung umfasst das Flächengebilde ein mehrlagiges Fadengelege aus schichtweise aufeinanderliegenden Fadenlagen, wobei mindestens eine Fadenlage im Zenit der Karkasse gegenüber der Umfangsrichtung einen Winkel von 40° bis 50° und die übrigen Fadenlagen im Zenit der Karkasse gegenüber der Umfangsrichtung einen Winkel von 0° bis 90° einschließen. Durch eine solche mehrlagige Ausbildung des Fadengeleges können Mehrlagen-Reifenkonstruktionen mit nur einer Trommelumdrehung einer entsprechenden Reifenbaumaschine und nur einem Auflageprozess auf einfachste Weise hergestellt werden, wobei durch die frei einstellbaren relativen Fadenwinkel der Rollwiderstand und Schnittschutz sowie die Reifendimension optimiert werden können.

Nach einem weiteren Vorschlag der Erfindung ist vorgesehen, dass jede Fadenlage des mehrlagigen Fadengeleges gegenüber einer benachbarten Fadenlage einen abweichenden Winkel zur Umfangsrichtung einschließt.

Generell zeichnet sich das erfindungsgemäß vorgesehene Fadengelege gegenüber einem konventionell zur Herstellung der Karkasse verwendeten Gewebe dadurch aus, dass die parallel verlaufenden Fäden keine Ondulation aufweisen, was einen besonders niedrigen Rollwiderstand des erfindungsgemäßen Reifens hervorbringt.

Erfindungsgemäß kann zur weiteren Eigenschaftsoptimierung vorgesehen sein, dass jede Fadenlage unterschiedliche Fadendichten und/oder unterschiedliche Fadenstärken enthält.

Die Fäden des erfindungsgemäß zur Ausbildung der Karkasse vorgesehenen Fadengeleges sind beispielsweise auf Basis von Aramidfasern, Polyesterfasern, Glasfasern, Kohlenstoffasern, Baumwolle, Polyethylen und/oder Stahlfasern gebildet.

Um das erfindungsgemäße Fadengelege für den Reifen Bauprozess weiter zu stabilisieren, ist nach einem Vorschlag der Erfindung vorgesehen, dass das Fadengelege mit Wirkfäden quer zur Erstreckungsrichtung der Fäden verwirkt ist.

Zur Erhöhung des Pannenschutzes, insbesondere des Schnittschutzes, kann nach einem weiteren Vorschlag der Erfindung vorgesehen sein, dass im Bereich der Seitenwände zusätzliche im Umfangsrichtung durchgängig verlaufende Seitenwandstreifen angeordnet sind.

Ebenso kann nach einem weiteren Vorschlag der Erfindung vorgesehen sein, dass zumindest im Bereich des Zenits zwischen der Karkasse und dem Laufstreifen ein in Umfangsrichtung durchgängig verlaufender Pannenschutzstreifen angeordnet ist.

Der Seitenwandstreifen und/oder der Pannenschutzstreifen können in an sich bekannter Weise z.B. aus Gewebelagen gebildet sein. In einer Ausgestaltung der Erfindung ist jedoch vorgesehen, den Pannenschutzstreifen und/oder die Seitenwandstreifen ebenfalls aus einem mindestens einlagigen Fadengelege aus parallel zueinander verlaufenden Fäden zu bilden, die zur Umfangsrichtung (U) einen Winkel zwischen 0° und 90 ° einschließen, d.h. es kann ein vergleichbares oder gleiches Fadengelege wie dasjenige zur Ausbildung der erfindungsgemäßen Karkasse zur Anwendung kommen.

Die Fäden des erfindungsgemäß vorgesehenen Fadengeleges weisen nach einer Ausgestaltung der Erfindung einen Durchmesser von 0,2 bis 0,4 mm, vorzugsweise etwa 0,3 mm auf und sind in einer dünnen Schicht einer geeigneten Gummimasse eingebettet, um die Karkasse auszubilden.

Die Gesamtdicke eines solchen Fadengeleges, welches beispielsweise durch Kalandrieren in die Gummimasse eingebettet ist, kann einschließlich der Gummimasse bei einem Fadendurchmesser von 0,2 mm etwa 0,5mm betragen. Bei Ausbildung eines mehrlagigen Fadengeleges für die Karkasse erhöht sich die Gesamtdicke entsprechend.

Weitere Ausgestaltungen und Einzelheiten der Erfindung werden nachfolgend anhand von Ausführungsbeispielen in der Zeichnung erläutert. Es zeigen:
- Figur 1: den Aufbau eines Reifens für einspurige Fahrzeuge in einer Explosionsdarstellung;
- Figur 2: den Reifen gemäß Figur 1 in einer teilweise geschnittenen perspektivischen Darstellung;
- Figur 3: die Aufsicht auf ein Flächengebilde zur Ausbildung der Karkasse des erfindungsgemäßen Reifens;
- Figur 4: eine weitere Ausgestaltung eines Reifens;
- Figur 5: eine weitere Ausgestaltung eines Reifens.

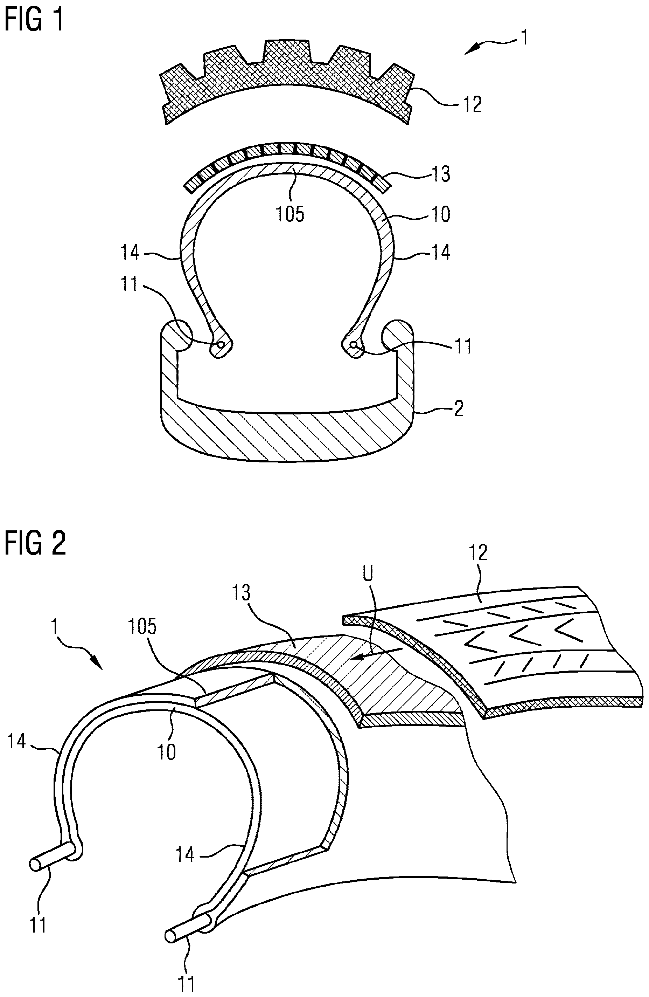

Aus der Figur 1 ist in einer stark vereinfachten schematischen Darstellung der Aufbau eines Reifens für einspurige Fahrzeuge, beispielsweise in Form eines Fahrradreifens für Rennräder dargestellt.

Der Reifen 1 umfasst eine im Querschnitt im wesentlichen kreisbogenförmig verlaufende Karkasse 10 aus einem nachfolgend noch näher erläuterten und in einer Gummimasse eingebetteten Flächengebilde, die ausgehend von einem Zenit 105 beidseitig über Seitenwände 14 in Wulsten mit einem eingebetteten Wulstkern 11 endet, sodass die Karkasse 10 in an sich bekannter Weise in einer entsprechenden Felge 2 aufgenommen werden kann. Anstelle eines dargestellten, sogenannten Clincher-Reifens mit Wulsten und eingebettetem Wulstkern 11 kann es sich beim Reifen 1 auch um einen im Querschnitt kreisförmig geschlossenen Tubular-Reifen handeln, der keine Wulste mit eingebettetem Wulstkern aufweist, sondern dessen geschlossene Karkasse radial innenseitig vernäht ist und der mittels Klebstoff und/oder Haftklebeband auf der Felge befestigt wird, wie es beispielhaft in der ISO 5775-1 2023 gegenübergestellt ist.

Wie insbesondere auch aus der Darstellung gemäß Figur 2 ersichtlich, umschlingt im dargestellten Ausführungsbeispiel eines Clincher-Reifens 1 die Karkasse 10 den Wulstkern 11 im Bereich beider Wulste und ist insoweit auch im Zenit 105 doppellagig ausgeführt. Diese Ausgestaltung ist jedoch lediglich exemplarisch zu verstehen. Der Wulstkern 11 kann beispielsweise aus einem Stahldraht oder anderen geeigneten hochfesten Materialen, wie Aramid- oder Carbonfasern bestehen.

Radial außenseitig auf die Karkasse 10 ist im Bereich des Zenits 105 in an sich bekannter Weise ein sich durchgängig in einer Umfangsrichtung U erstreckender Laufstreifen 12 aufgebracht, der auch eine entsprechende Profilierung aufweisen kann, ferner ist im dargestellten Ausführungsbeispiel zwischen Laufstreifen 12 und Karkasse 10 ein ebenfalls durchgängig entlang der Umfangsrichtung U verlaufender Pannenschutzstreifen 13 als weitere Lage angeordnet.

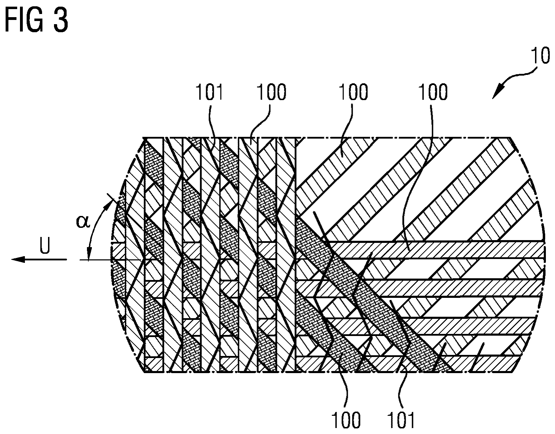

Wesentliches Merkmal des aus den Figuren ersichtlichen Reifens 1 ist es, dass die Karkasse 10 aus einem in Gummimaterial eingebetteten Flächengebilde hergestellt ist, welches gemäß der Darstellung in der Figur 3 von einem hier mehrlagigen Fadengelege gebildet ist, wobei die Fäden 100 einer jeden Fadenlage parallel zueinander verlaufen und in Bezug auf die Umfangsrichtung U unterschiedliche Winkel mit dieser Umfangsrichtung U einschließen.

Die in der Zeichenebene zuoberst liegende Fadenlage umfasst Fäden 100, die mit der Umfangsrichtung U einen Winkel von 90° einschließen. Die darunter befindliche nächste Fadenlage umfasst Fäden 100, die mit der Umfangsrichtung U einen Winkel α von etwa 45° einschließen, während die darunter befindliche nächste Fadenlage Fäden 100 umfasst, die mit der Umfangsrichtung U einen Winkel von 0° einschließen, d. h. parallel zur Umfangsrichtung U verlaufen. Noch weiter darunter umfasst die zuunterst ersichtliche Fadenlage parallel zueinander verlaufenden Fäden 100, die erneut mit der Umfangsrichtung U einen Winkel α von etwa 45° einschließen, jedoch mit entgegengesetzter Steigung zur zweitoberst gelegenen Fadenlage.

Im dargestellten Ausführungsbeispiel sind alle parallel zueinander verlaufenden Fäden 100 einer jeden Fadenlage mittels Wirkfäden 101 verwirkt, um Ihre parallele Ausrichtung zueinander zu sichern. Dies ist allerdings nicht zwingend vorzusehen, vielmehr kann der Verwirkungsgrad der parallel verlaufenden Fäden sowie der einzelnen Fadenlagen variieren, solange die Wirkfäden die Aufgabe erfüllen, die parallele Ausrichtung der Fäden zueinander zu sichern.

Ein solches Fadengelege umfasst parallel zueinander verlaufenden Fäden, die keine Ondulation aufweisen, wie es beispielsweise bei einem Gewebe mit miteinander verwobenen Kett- und Schussfäden der Fall ist und zeichnet sich durch einen besonders günstigen Rollwiderstand aus.

Zudem kann das aus einem solchen Fadengelege hergestellte Flächengebilde zur Ausbildung der Karkasse 10 unmittelbar in der für den Reifenbau gewünschten Winkelorientierung aller Fäden 100 der einzelnen Fadenlagen produziert werden, sodass auf das beim Verwenden von Geweben erforderliche Spleißen verzichtet werden kann. Die Orientierungen der Fäden 100 in den einzelnen Fadenlagen relativ zur Umfangsrichtung U können zwischen 0° und 90° beliebig und frei vorgewählt werden.

Es ist somit möglich, das Flächengebilde in einer Gummimasse zum Beispiel durch Kalandrieren einzubetten und das solchermaßen gebildete Rohmaterial für die Karkasse auf einer Reifenbauanlage mit nur einer Trommelumdrehung und einem Auflagenprozess unmittelbar in der gewünschten Fadenorientierung zuzuführen und die Karkasse 10 auszubilden.

Durch die frei einstellbaren relativen Fadenwinkel können Rollwiderstand sowie Schnittschutz und Reifendimension optimiert werden, wobei durch eine Variation des Verwirkungsgrades mittels der Wirkfäden 101 zudem der Rollwiderstand und erzielbare Schnittschutz weiter optimiert werden können.

Alternativ zum Verwirken können auch andere geeignete Verfahren zum mechanischen Fixieren vorgesehen sein, beispielsweise Tuften, Vernähen oder Versticken, um eine ausreichende Festigkeit zum Kalandrieren mit der Gummimasse zu erzeugen.

Die Fäden 100 können beispielsweise aus Aramidfasern mit einem Durchmesser von 0,3 mm hergestellt sein, wobei im Falle eines einlagigen Flächengebildes eine Gesamtdicke einer Lage der Karkasse 10 von etwa 0,5 mm bis 0,6 mm realisiert werden kann und auf diese Weise Eigenschaften eines bislang verwendeten Gewebes mit geringer Schussfadendichte trotz der deutlich vereinfachten Herstellung erreicht werden können. Anstelle eines solchen mono-axialen Geleges können, wie aus der Fig. 3 ersichtlich, auch die dargestellten multi-axialen Gelege für Anwendungen mit höheren Festigkeiten und besserem Pannenschutz der Karkasse vorgesehen sein, auch kann ein bi-axiales Gelege vorgesehen sein.

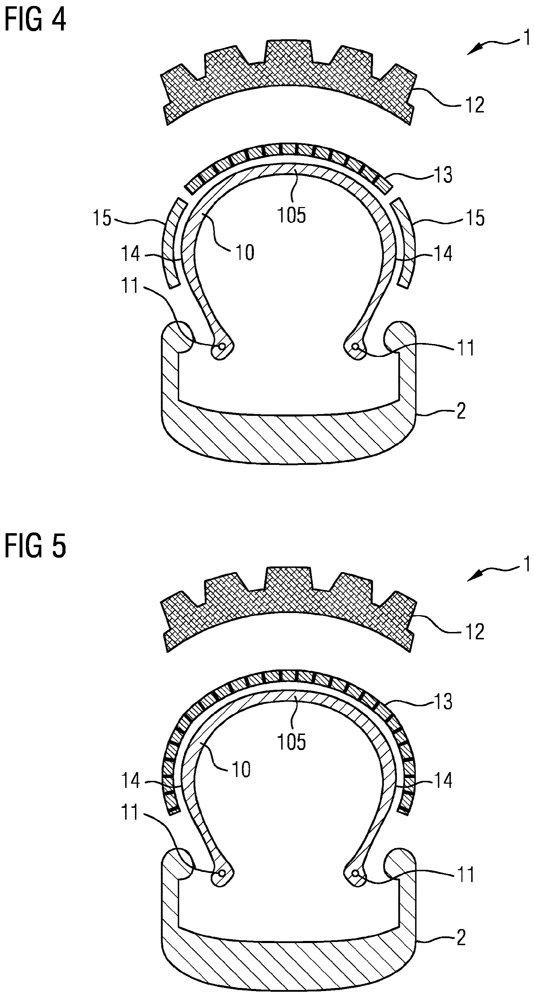

Aus der weiteren Ausführungsform gemäß Figur 4, bei der gleiche Teile gleiche Bezugszeichen wie in Figuren 1 bis 3 erhalten haben und zur Vermeidung von Wiederholungen nicht nochmals gesondert erläutert werden, ist ersichtlich, dass zusätzlich oder alternativ zum Pannenschutzstreifen 13 auch weitere Seitenschutzstreifen 15 auf den Bereich der Seitenwände 14 der Karkasse 10 aufgebracht werden können, um insbesondere die Schnittschutzfestigkeit eines solchen Reifens 1 zu erhöhen.

Auch kann gemäß Darstellung in der Figur 5 vorgesehen sein, den Pannenschutzstreifen 13 so breit auszuführen, dass dieser über den Laufstreifen 12 hinaus bis in den Bereich der Seitenwände 14 reicht, um die Seitenwände 14 zu verstärken.

Sowohl der Pannenschutzstreifen 13 als auch etwaige Seitenschutzstreifen 15 können ebenfalls aus Fadengelegen hergestellt sein, wie sie beispielhaft aus der Figur 3 ersichtlich sind und zur Ausbildung der Karkasse 10 vorgesehen sind.

### Bezugszeichenliste

- 1:: Reifen
- 2:: Felge
- 10:: Karkasse
- 11:: Wulstkern
- 12:: Laufstreifen
- 13:: Pannenschutzstreifen
- 14:: Seitenwand
- 15:: Seitenschutzstreifen
- 100:: Faden
- 101:: Wirkfaden
- 105:: Zenit

- U:: Umfangsrichtung
- α:: Winkel

## Patentansprüche

1. Reifen (1) für einspurige Fahrzeuge, umfassend eine Karkasse (10) aus einem in Gummimasse eingebetteten Flächengebilde auf Basis von Fäden (100), wobei die Karkasse (10) im Querschnitt betrachtet im Wesentlichen kreisbogenförmig ausgebildet ist und ausgehend von einem Zenit (105) beidseits über Seitenwände (14) verläuft, und einem umfänglich auf die Karkasse (10) in einer Umfangsrichtung (U) durchgängig aufgebrachten Laufstreifen (12), **dadurch gekennzeichnet, dass** das Flächengebilde der Karkasse (10) aus einem nicht gespleißten mindestens einlagigen Fadengelege aus parallel zueinander verlaufenden Fäden (100) gebildet ist, wobei die Fäden (100) mindestens einer Lage des Fadengeleges im Zenit (105) der Karkasse (10) gegenüber der Umfangsrichtung (U) einen Winkel (α) von 40° bis 50° einschließen.

2. Reifen (1) nach Anspruch 1, **dadurch gekennzeichnet, dass** das Flächengebilde ein mehrlagiges Fadengelege aus schichtweise aufeinanderliegenden Fadenlagen umfasst, wobei mindestens eine Fadenlage im Zenit (105) der Karkasse (10) gegenüber der Umfangsrichtung (U) einen Winkel (α) von 40° bis 50° und die übrigen Fadenlagen im Zenit (105) der Karkasse (10) gegenüber der Umfangsrichtung (U) einen Winkel (α) von 0° bis 90° einschließen.

3. Reifen (1) nach Anspruch 1 oder 2, **dadurch gekennzeichnet, dass** jede Fadenlage des mehrlagigen Fadengeleges gegenüber einer benachbarten Fadenlage einen abweichenden Winkel zur Umfangsrichtung (U) einschließt.

4. Reifen (1) nach einem der Ansprüche 1 bis 3, **dadurch gekennzeichnet, dass** jede Fadenlage unterschiedliche Fadendichten und/oder unterschiedliche Fadenstärken enthält.

5. Reifen (1) nach einem der Ansprüche 1 bis 4, **dadurch gekennzeichnet, dass** die Fäden (100) des Fadengeleges auf Basis von Aramidfasern, Polyesterfasern, Glasfasern, Kohlenstoffasern, Baumwolle, Polyethylen und/oder Stahlfasern gebildet sind.

6. Reifen (1) nach einem der Ansprüche 1 bis 5, **dadurch gekennzeichnet, dass** das Fadengelege mechanisch fixiert ist, vorzugsweise durch Verwirken, Vernähen oder Versticken.

7. Reifen (1) nach einem der Ansprüche 1 bis 6, **dadurch gekennzeichnet, dass** im Bereich der Seitenwände (14) zusätzlich im Umfangsrichtung (U) durchgängig verlaufende Seitenwandstreifen (15) angeordnet sind.

8. Reifen (1) nach einem der Ansprüche 1 bis 7, **dadurch gekennzeichnet, dass** zumindest im Bereich des Zenits (105) zwischen der Karkasse (10) und dem Laufstreifen (12) mindestens ein in Umfangsrichtung (U) durchgängig verlaufender Pannenschutzstreifen (13) angeordnet ist.

9. Reifen (1) nach einem der Ansprüche 7 oder 8, **dadurch gekennzeichnet, dass** der Seitenwandstreifen (15) und/oder der Pannenschutzstreifen (13) aus einem mindestens einlagigen Fadengelege aus parallel zueinander verlaufenden Fäden gebildet sind, die zur Umfangsrichtung (U) einen Winkel zwischen 0° und 90 ° einschließen.

10. Reifen nach einem der Ansprüche 1 bis 9, **dadurch gekennzeichnet, dass** die Fäden (100) einen Durchmesser von 0,2 bis 0,4 mm aufweisen.
